# EUROPEAN PATENT APPLICATION

(11) **EP 4 468 823 A2**
(43) Date of publication of application: **27.11.2024**
(21) Application number: 24178012.1
(22) Date of filing: 24.05.2024
(51) Int. Cl.: H05B 6/64, H05B 6/68

(54) **COOKING APPLIANCE**

(30) Priority: 26.05.2023 KR 20230068507
(71) Applicant: LG Electronics Inc., Yeongdeungpo-gu Seoul 07336 (KR)
(72) Inventor: CHAE, Yunbyung, 08592 Seoul (KR); YANG, Jaekyung, 08592 Seoul (KR); SIM, Sunghun, 08592 Seoul (KR); HA, Junghyeong, 08592 Seoul (KR); SHIN, Myeongjun, 08592 Seoul (KR)
(74) Representative: Vossius & Partner Patentanwälte Rechtsanwälte mbB

(57) **Abstract**

A cooking appliance is provided. The cooking appliance may include a solid-state power modulator (SSPM) configured to generate frequency and radio frequency (RF) output, a power supply configured to supply power to the SSPM, an antenna configured to radiate the RF output to a load, a temperature sensor configured to acquire internal temperature data of the load, and a controller configured to perform variable control on the frequency and RF output based on the acquired internal temperature data of the load.

## Description

### BACKGROUND

The present disclosure relates to a cooking appliance.

Various types of cooking appliances are used to heat food at home or in the restaurant. For example, various cooking appliances such as microwave ovens, induction heating type electric stoves, and grill heaters are used.

A microwave oven is a high-frequency heating type cooking appliance that uses molecules in a high-frequency electric field to vibrate violently and generate heat, allowing food to be heated evenly in a short period of time.

An induction heating type electric stove is a cooking appliance that heats an object to be heated by using electromagnetic induction. Specifically, when high-frequency power of a predetermined magnitude is applied to a coil, the induction heating type electric stove generates an eddy current in the object to be heated consisting of a metal component using a magnetic field generated around the coil to heat the object to be heated itself.

A grill heater is a cooking appliance that heats food by radiating or convecting infrared heat. Because the infrared heat penetrates through food, the food may be heated evenly as a whole.

### SUMMARY

The present disclosure provides a combination cooking appliance using radio frequency (RF) heating that monitors a load in real time and automatically controls cooking.

The present disclosure provides a combination cooking appliance that perform variable control on frequency and output based on real-time temperature monitoring of a load using at least one sensor.

A cooking appliance according to an embodiment of the present disclosure may include a solid-state power modulator (SSPM) configured to generate frequency and radio frequency (RF) output, a power supply configured to supply power to the SSPM, an antenna configured to radiate the RF output to a load, a temperature sensor configured to acquire internal temperature data of the load, and a controller configured to perform variable control on the frequency and RF output based on the acquired internal temperature data of the load.

In this case, the controller may be configured to determine whether the acquired internal temperature data of the load reaches a first reference temperature.

The controller may be configured to, when the internal temperature data of the load does not reach the first reference temperature, determine whether the internal temperature data of the load satisfies a second reference temperature.

In addition, the controller may be configured to, when the internal temperature data of the load does not satisfy the second reference temperature, perform variable control on the frequency and RF output.

The controller may be configured to: scan a frequency and detect reflected output; when the detected reflected output satisfies a reference output, determine the scanned frequency; and when an internal temperature is lower than a current temperature, perform variable control to increase an output of the SSPM.

In addition, the controller is configured to: scan a frequency and detect reflected output; when the detected reflected output satisfies a reference output, determine the scanned frequency; and when an internal temperature is higher than a current temperature, perform variable control to decrease an output of the SSPM.

The temperature sensor may include at least one sub-sensor or may be a multi-sensor.

A cooking appliance according to an embodiment of the present disclosure may include a heater configured to generate heat for heating a load, a power supply configured to supply power to the heater, an image sensor configured to acquire an image of a surface of the load, and a controller configured to compare and analyze the acquired image of the surface of the load with a prestored reference image and perform variable control on an output of the heater based on a comparison analysis result.

In this case, the controller may be configured to extract a searing factor from the image of the surface of the load and compare the extracted searing factor with a first reference searing factor extracted from the reference image.

The controller may be configured to compare the searing factor extracted from the image of the surface of the load with a second reference searing factor when a difference between the searing factor and the first reference searing factor is greater than or equal to a first threshold value.

In addition, the controller may be configured to perform variable control on an output of the heater when a difference between the searing factor extracted from the image of the surface of the load and a second reference searing factor is greater than or equal to a second threshold value.

The controller may be configured to perform variable control to increase the output of the heater when the difference between the searing factor extracted from the image of the surface of the load and the second reference searing factor is greater than or equal to the second threshold value.

In addition, the controller may be configured to perform variable control to decrease the output of the heater when the difference between the searing factor extracted from the acquired image of the load and the second reference searing factor is greater than or equal to a third threshold value.

The image sensor may include at least one camera sensor.

A cooking appliance according to an embodiment of the present disclosure may include a solid-state power modulator (SSPM) configured to generate frequency and radio frequency (RF) output, a heater configured to generate heat for heating a load, a power supply configured to supply power to the SSPM and the heater, an antenna configured to radiate the RF output to the load, a sensor configured to acquire internal temperature data of the load and acquire a surface image of the load, and a controller configured to perform variable control on at least one of the frequency and RF output or an output of the heater based on the internal temperature data of the load and an image acquired from the surface image.

### BRIEF DESCRIPTION OF THE DRAWINGS

FIG. 1 is a perspective view of a cooking appliance according to an embodiment of the present disclosure.
FIGS. 2 to 4 are control block diagrams of a cooking appliance according to an embodiment of the present disclosure.
FIG. 5 is a cross-sectional view of a cooking appliance according to an embodiment of the present disclosure.
FIGS. 6 to 9 are diagrams for describing a method for controlling an operation of a cooking appliance according to an embodiment of the present disclosure.
FIG. 10 is a diagram for describing an output mechanism according to an embodiment of the present disclosure.
FIG. 11 is a diagram for describing a heating operation and a defrosting operation of a cooking appliance according to an embodiment of the present disclosure.
FIG. 12 is a diagram for describing an output variable control algorithm according to a location of a load.
FIGS. 13 and 14 are diagrams for describing a cooking appliance provided with multi-sensors according to an embodiment of the present disclosure.
FIG. 15 is a diagram for describing a cooking appliance provided with multi-sensors according to another embodiment of the present disclosure.
FIG. 16 is a diagram for describing an arrangement and structure of multi-sensors in a cooking appliance according to an embodiment of the present disclosure.
FIG. 17 is a diagram for describing a cooking appliance provided with a movable antenna according to an embodiment of the present disclosure.
FIG. 18 is a flowchart for describing a method for controlling a cooking appliance provided with a movable antenna according to an embodiment of the present disclosure.

### DETAILED DESCRIPTION OF THE EMBODIMENTS

Hereinafter, embodiments of the present disclosure will be described in detail with reference to the accompanying drawings. Throughout the drawings, the same reference numerals are used to indicate the same or similar components.

Hereinafter, a cooking appliance according to an embodiment of the present disclosure will be described.

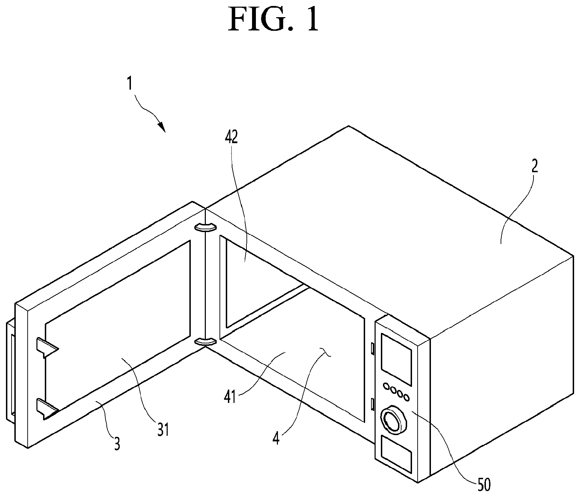

FIG. 1 is a perspective view of a cooking appliance 1 according to an embodiment of the present disclosure.

The cooking appliance 1 according to an embodiment of the present disclosure may include a housing 2 and a door 3 connected to the housing 2.

A cavity 4 may be formed in the housing 2. The cavity 4 may be a cooking chamber. The cavity 4 may be a cooking space where a load, that is, an object to be heated, is placed.

An input interface 50 may be formed on the outer surface of the housing 2. The input interface 50 may receive a user input for manipulating the cooking appliance 1.

The cavity 4 may be opened or closed by the door 3. The door 3 may be openably attached to the front portion of the housing 2. The door 3 may open and close the cavity 4.

A window 31 may be formed in the door 3. The user may check the inside of the cavity 4 through the window 31 when the cavity 4 is closed. The window 31 may include a window unit and a shielding unit.

The window unit may be formed of a transparent or a translucent material. The user may see the inside of the cavity 4 through the window unit.

The shielding unit may be mounted on the inner surface of the window unit. The shielding unit may block radio frequency (RF) from the cavity 4 from leaking out of the cooking appliance 1 through the door 3.

The shielding unit may be a wire mesh. A plurality of shielding holes may be defined in the shielding unit. The user may see the inside of the cavity 4 through the shielding hole, and RF does not pass through the shielding holes.

The cooking appliance according to an embodiment of the present disclosure may be an RF combination cooking appliance using RF heating, but the present disclosure is not limited thereto. Meanwhile, the RF combination cooking appliance may be an RF combination oven.

When cooking or defrosting the load, the cooking appliance according to the present disclosure may sense the load through at least one sensor, monitor sensing data in real time, and automatically control the operation of the cooking appliance.

The load may be food or an object to be heated, which is located within the cooking appliance and is heated or cooked by RF.

The at least one sensor may include a probe that is inserted into the load to acquire temperature data inside the load, an image sensor that acquires an image of the outer surface of the load, or a combination thereof. The image sensor may include a camera sensor. The cooking appliance may acquire, from the image of the outer surface of the load, data about the degree of searing of the outer surface of the load due to heating or cooking, that is, a searing value or brightness.

The cooking appliance 1 automatically ends cooking for the load when a set temperature is reached.

The cooking appliance 1 according to the present disclosure may not have a plate (e.g., a turntable) that assists uniform heating through the rotation of the load. The cooking appliance 1 may include at least one antenna for RF heating. However, the location or RF output direction of the at least one antenna in the cooking appliance 1 may be fixed. Therefore, since the load does not rotate in the cooking appliance 1, uniform heating is not easy.

Meanwhile, the cooking appliance 1 may calculate S11 (reflected wave/incident wave) through frequency scan and may heat the load by storing only the frequency that satisfies preset criteria, but accuracy may be low.

The cooking appliance 1 according to the present disclosure may collect and monitor sensing data about the load in real time by using at least one sensor (i.e., a temperature sensor such as a probe and/or an image sensor including a camera). As described above, the sensing data about the load may be data about the internal temperature or external cooking level of the load.

The cooking appliance 1 may monitor temperature data for a specific location or a plurality of locations of the load in real time by using at least one sensor.

The cooking appliance 1 may perform variable control on the RF frequency and output based on the temperature data for the load monitored in real time, external searing value (i.e., brightness) of the load, etc. In this manner, the cooking appliance 1 according to the present disclosure may be more efficient than the conventional cooking appliance and may accurately and uniformly heat the load.

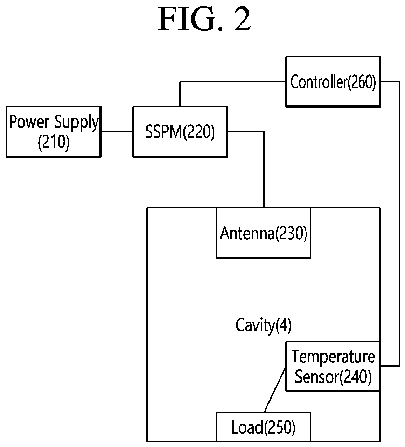

FIGS. 2 to 4 are control block diagrams of the cooking appliance 1 according to an embodiment of the present disclosure.

Referring to FIG. 2, the cooking appliance 1 may be configured to include a power supply 210, a solid-state power modulator (SSPM) 220, an antenna 230, a probe 240, and controller 260.

The power supply 210 may supply power such that the SSPM 220 operates. The power supply 210 may be a DC power supply device.

The SSPM 220 may generate a desired heating frequency and RF output.

The RF output generated from the SSPM 220 may simultaneously penetrate through and directly heat the outside and inside of the load. Therefore, the temperature state of the load may be quickly controlled according to the RF output generated from the SSPM 220.

The cooking appliance 1 may heat food by oscillating one or more RF outputs from the SSPM 220, transmitting the RF outputs through a transmission line, and radiating the RF outputs to one or more multiple antennas inside the cooking chamber 4. That is, the cooking appliance 1 may perform accelerated heating control on the state of the load (e.g., temperature, etc.) by performing variable control on the RF output oscillated from the SSPM 220.

Although not illustrated, the SSPM 220 may be configured to include at least one of a signal generator configured to generate an RF signal, a signal intensity controller configured to control the frequency output generated by the signal generator, a phase controller configured to change the phase of the signal whose intensity is controlled by the signal intensity controller, a signal amplifier configured to amplify the controlled phase signal, a DC power supply configured to supply power necessary for signal amplification, a signal output detector configured to detect the output in which the signal amplified by the signal amplifier is radiated in a forward direction and the output in the reverse direction in which the signal is reflected and returned, a signal transmitter configured to radiate the amplified signal from a heater cooking chamber 4, a protection circuit configured to protect important core elements and circuits from the output coming in the reverse direction due to reflected waves, or an integrated controller configured to generate and control the RF frequency. However, not all of the listed components may be required.

The SSPM 220 may implement one or more multiple RF output oscillator circuits into one integrated circuit and may generate and vary the RF frequency signal by controlling the signal generator through the integrated controller located inside the SSPM 220. Additionally, the signals generated by the signal generator may be applied to the signal intensity controller to vary the output of the RF signal. The phase of the signal applied from the signal intensity controller may be changed in the phase controller by the integrated controller.

The output signal amplified by the signal amplifier of the SSPM 220 may be radiated from the radiation antenna 230 of the signal transmitter to the cooking chamber 4. The forward and reverse outputs of the radiated RF signal may be detected by the signal transmitter. The heating state (temperature) of the load may be controlled by controlling the frequency, output, phase, etc. by comparing and analyzing the detected signals in the integrated controller. Additionally, the signal transmitter may protect the internal circuit from signals that are reflected inside the SSPM 220 and output in the reverse direction.

The antenna 230 may radiate the RF output generated by the SSPM 220 to the load 250 located in the cooking chamber (i.e., the cavity 4) through the transmission line.

The temperature sensor 240 may be inserted into the load 250 to measure the temperature inside the load 250.

The controller 260 can generally control the operation of the cooking appliance 1. The controller 260 may monitor temperature data measured for the load 250 by the temperature sensor 240 and may control the SSPM 220 to perform variable control on the frequency and RF output.

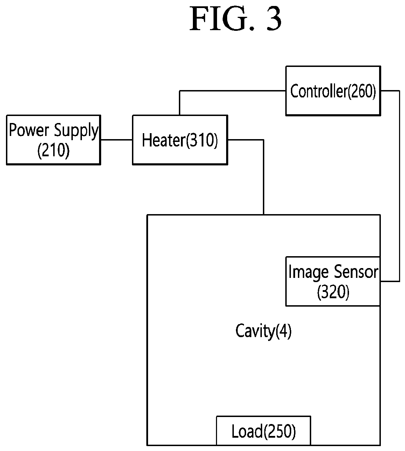

Referring to FIG. 3, the cooking appliance 1 may be configured to include a power supply 210, a heater 310, a camera sensor 320, and a controller 260.

The power supply 210 may supply power such that the heater 310 operates. The power supply 210 may be a DC power supply device.

The heater 310 may generate heat for heating the load 250.

The image sensor 320 may acquire an image of the load 250 located within the cavity 4.

The controller 260 may acquire a brightness value for the outer surface of the load 250 from the image acquired by the image sensor 320, may control the heater 310 by monitoring the load 250, may perform variable control on the output of the heater 310.

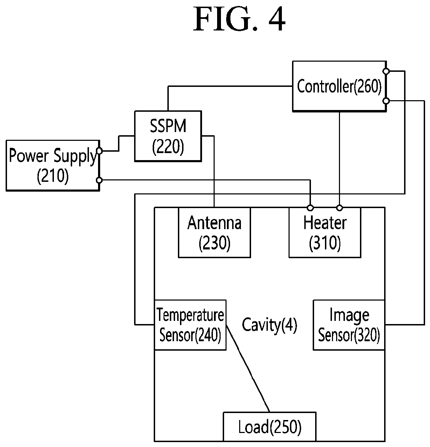

Referring to FIG. 4, the cooking appliance 1 may be configured to include a power supply 210, an SSPM 220, an antenna 230, a temperature sensor 240, a heater 310, an image sensor 320, and a controller 260.

FIG. 4 may be a combination of FIGS. 2 and 3. Therefore, the description of FIGS. 2 and 3 are equally applied to each component of FIG. 4, and redundant descriptions thereof are omitted.

However, since the function of the controller 260 is a combination of FIGS. 2 and 3, it will be described separately and may be as follows.

The controller 260 may monitor the load 250 by activating only one of the temperature sensor 240 and the image sensor 320 and acquiring sensing data therefrom.

The controller 260 may control both the temperature sensor 240 and the image sensor 320 to be activated. In this case, the activation may be performed simultaneously or sequentially at intervals. In the latter case, for example, the controller 260 may activate the image sensor 320, and then, may further determine and control whether to activate the temperature sensor 240, based on the image analysis result acquired through the image sensor 320. The same is applied to the opposite case.

In FIGS. 2 and 4, only one SSPM 220 is illustrated, but a plurality of SSPMs 220 (e.g., for low frequency bands, for high frequency bands, etc.) may be provided according to the RF output or frequency band.

In FIGS. 2 and 4, only one antenna 230 is illustrated, but a plurality of antennas may be provided in the cavity 4. At this time, each antenna may be disposed at an appropriate position in consideration of the radiation direction or radiation angle such that the RF output generated by the SSPM 220 is uniformly radiated to the load 250.

According to embodiments, considering at least one of the size, shape, type, type, etc. of the load 250 to be placed in the cavity 4, at least one antenna 230 may be movable rather than fixed in position within the cavity 4, such that the RF output is well radiated to the load 250.

In FIGS. 3 and 4, only one heater 310 is illustrated, but a plurality of heaters, such as one heater 310 at the top of the cavity 4 and one heater 310 at the bottom of the cavity 4, may be provided. According to embodiments, the heater may be further provided on the side of the cavity 4.

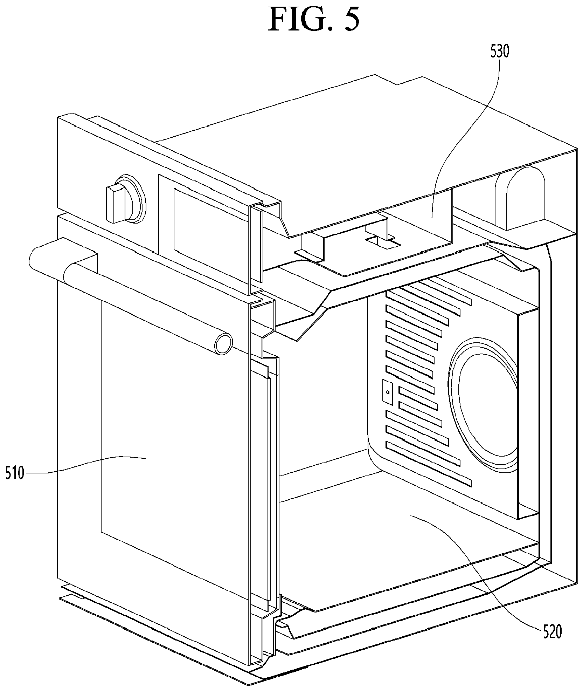

FIG. 5 is a cross-sectional view of the cooking appliance 1 according to an embodiment of the present disclosure.

Referring to FIG. 5, the cooking appliance 1 may include a door 510, a cooking chamber 520, and an electronic component chamber 530.

The door 510 may be configured to reflect a shielding structure such that not only electromagnetic waves radiated from the electronic component chamber 530 to the load of the cooking chamber 520 but also heat generated by the heater do not leak out to the outside.

Meanwhile, the door 510 may include a window made of transparent glass such as ceramic glass. The window may be implemented in the form of a mesh plate (a porous mesh).

The cooking chamber 520 may have a shape that reflects an RF-compatible structure. The cooking chamber 520 may include a convection portion, a broil heater, an antenna, and at least one sensor.

The convection portion may include a convection cover and a motor. This convection portion may be mounted inside the cooking chamber or have a wide cover type chamber structure. Meanwhile, in the convection portion, a mesh for shielding the fan and the motor may be applied. However, the present disclosure is not limited thereto.

The broil heater may be controlled through a camera.

The antenna may be controlled through a voltage standing wave ratio (VSWR), a temperature sensor, etc.

The electronic component chamber 530 may include a control circuit printed circuit board (PCB) and RF major components (particularly cooling-related components) such as an SSPM/switched-mode power supply (SMPS) and RF feeding unit, a heat sinks, and a fan.

However, according to embodiments, the configuration or structure of FIG. 5 may be different from that illustrated herein.

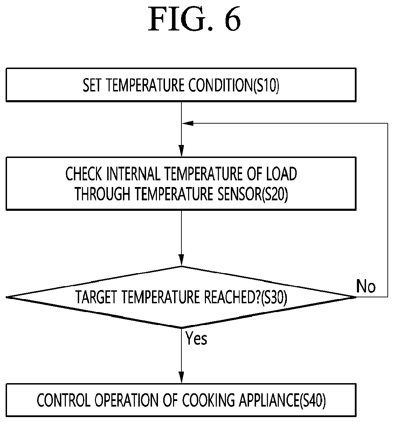

FIGS. 6 to 9 are diagrams for describing a method for controlling the operation of the cooking appliance 1 according to an embodiment of the present disclosure.

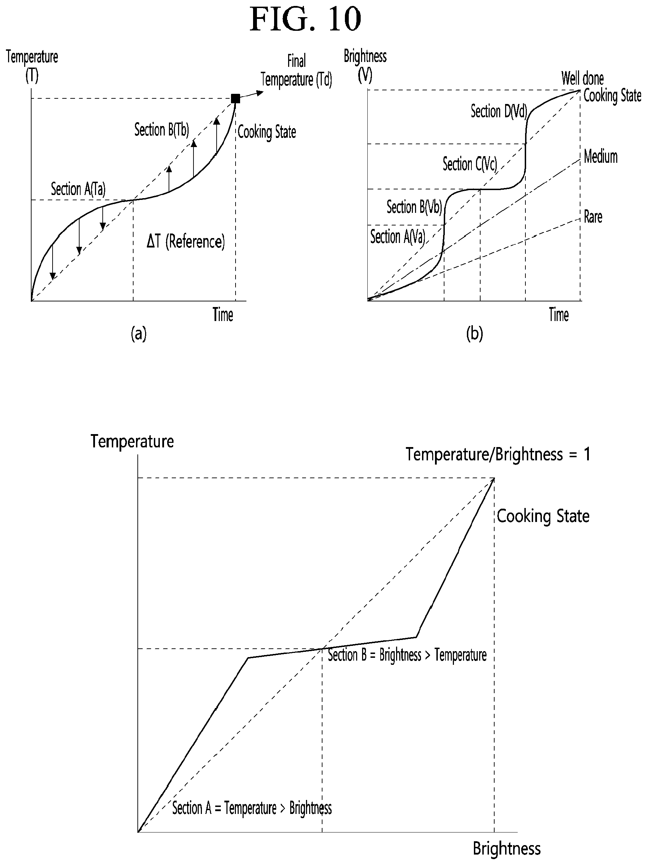

FIG. 10 is a diagram for describing a time-specific output control mechanism of the cooking appliance 1 according to an embodiment of the present disclosure.

Referring to FIG. 6, in operation S10, the cooking appliance 1 may receive an input for a temperature condition from the user through an interface and set the received input. At this time, the temperature condition may include at least one of the temperature of the cooking appliance 1 or the temperature of the temperature sensor.

In operation 520, the cooking appliance 1 may check the internal temperature of the load through the temperature sensor. This operation may be performed periodically/non-periodically. When there is a preset timer or time, this operation may be performed accordingly. Typically, the oven is a heating furnace using a heater and convection, and the temperature sensor may be used as an auxiliary device to probe the temperature of the load.

In operation S30, the cooking appliance 1 may determine whether the internal temperature of the load checked through operation S20 has reached a set target temperature.

In operation S40, the cooking appliance 1 may control the operation of the cooking appliance 1 when the internal temperature of the load reaches the set target temperature as the result of the determination in operation 530. Controlling the operation of the cooking appliance 1 may include controlling the operation of the cooking appliance, that is, ending the operation, when it is considered that cooking for the load has been completed.

Regarding operation S10, the temperature setting condition of the cooking appliance 1 is different for each cooking condition. For example, in the case of roast, the temperature is usually set within the range of 400°F to 450°F, and in the case of bake, the temperature is set within the range of 325°F to 350°F, but the temperature is not a fixed value and may be arbitrarily changed.

The cooking appliance 1 according to the present disclosure simultaneously heats the outside and inside of the load by adding an RF heat source to the existing oven heating method, thereby shortening the cooking time.

As described above, the cooking appliance 1 does not have a turntable to heat the load uniformly like a microwave oven. Accordingly, for example, S11 (reflected wave/incident wave) and S21 (isolation) may be calculated through frequency scan within the RF operating frequency range.

Thereafter, the cooking appliance 1 may store and heat only the frequency that satisfies the preset criteria based on the calculation result.

Since the load matching of the cooking appliance 1 changes in real time according to the load due to heating or the change in moisture content in the cooking chamber, heating may be repeatedly performed by rescanning after a certain period of time.

Monitoring the state of the load through RF scan alone may be less accurate. Therefore, the cooking appliance 1 according to the present disclosure may be supplemented with information based on at least one sensor technology such as a temperature sensor and an image sensor, thereby improving accuracy.

In this regard, the cooking appliance 1 according to the present disclosure may monitor the state of the load (e.g., temperature) in real time and transmit the monitored state to the controller. The controller may control the frequency control and output variation through frequency scan of the SSPM based on the transmitted value.

Looking at the heating example in the present disclosure, it may be done as follows. When the internal temperature of the temperature sensor is below the reference temperature, the cooking appliance 1 may scan the frequency, store the heating frequency, and increase the RF output. Meanwhile, when the internal temperature of the temperature sensor is higher than the reference temperature, the cooking appliance 1 may scan the frequency, store the heating frequency, and lower or turn off the RF output.

The operation of the cooking appliance 1 will be described in more detail as follows.

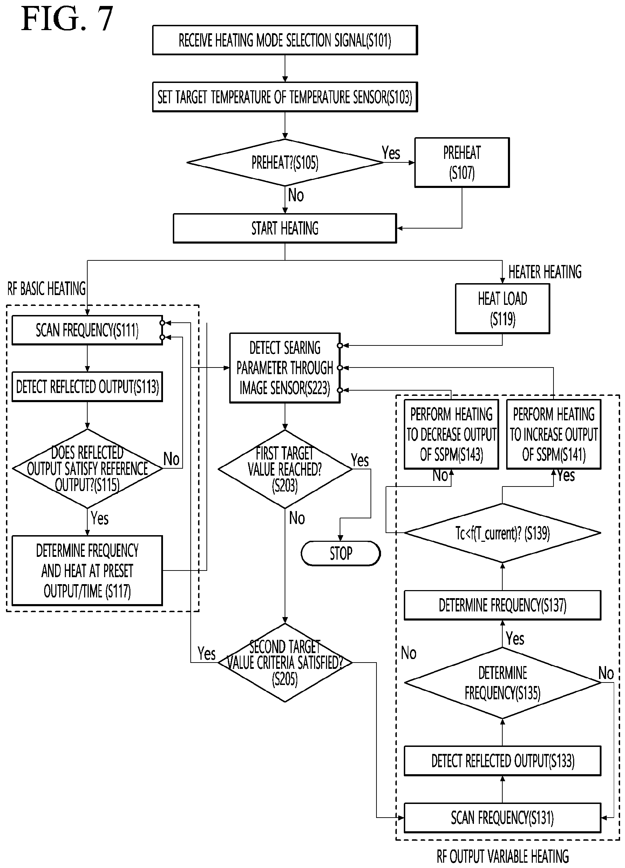

FIG. 7 is a flowchart for describing an example of the operation control algorithm of the cooking appliance 1 according to a combination of the RF output and the temperature sensor.

Referring to FIG. 7, in operation S101, the cooking appliance 1 may receive a heating mode selection signal selected by a user. The heating mode may include the roast, the bake, and the defrost described above.

In operation S103, the cooking appliance 1 may set the target temperature of the temperature sensor. At this time, there may be at least two set target temperatures. The plurality of target temperatures may include, for example, internal temperature and external temperature. The target temperature setting of the temperature sensor may be determined according to the heating mode selection signal received by the cooking appliance 1 in operation S101. The target temperature determined in this way may be automatically set. However, the present disclosure is not limited thereto.

In operation S105, the cooking appliance 1 may determine whether to perform a preheat operation. In operation S107, the cooking appliance 1 may perform a preheat as the result of the determination in operation S105.

The cooking appliance 1 may start cooking, that is, heating, for the load. This may be performed when, as the result of the determination in operation S105, it is unnecessary to perform a preheat operation or when the preheat operation is completed.

When heating for the load begins, the cooking appliance 1 may perform RF basic heating and heater heating together or sequentially. For convenience of explanation, an example in which RF basic heating and heater heating are performed together will be described.

Regarding RF basic heating, in operation Sill, the cooking appliance 1 may scan the frequency through the RF low power.

In operation S113, the cooking appliance 1 may detect a reflected output as the result of the frequency scan through the RF low power.

In operation S115, the cooking appliance 1 may determine whether the reflected output satisfies a predefined reference output.

As the result of the determination in operation S115, when the reflected output does not satisfy the reference output, operation Sill, that is, frequency scan, may be re-performed.

Meanwhile, when satisfied, in operation S117, the cooking appliance 1 may determine the frequency and heat at a preset output/time.

In operation S121, the cooking appliance 1 may sense the internal temperature of the load through the temperature sensor. At this time, there may be at least two sensed internal temperatures. One temperature sensor or a plurality of temperature sensors may be used to sense two or more temperatures. In this manner, the internal temperatures at different locations of the load may be measured.

Meanwhile, in relation to the heater heating, the cooking appliance 1 may heat the load through the heater in operation S119.

Thereafter, the cooking appliance 1 may sense the temperature of the load through the temperature sensor as the result of heating the load through SSPM.

In operation S123, the cooking appliance 1 may determine whether the internal temperature of the load sensed through the temperature sensor has reached the target temperature (i.e., a first target value). At this time, in operation S123, the cooking appliance 1 may perform both determination as to whether Tc is greater than or equal to Tc_target (a first temperature determination) and determination as to whether To is greater than or equal to To_target (second temperature determination). Tc may represent the internal temperature of the load, and To may represent the external temperature of the load.

As the result of the determination in operation S123, when the internal temperature of the load sensed through the temperature sensor (e.g., all temperatures when a plurality of internal temperatures of the load are sensed) reaches the target temperature, the cooking appliance 1 may stop heating.

Meanwhile, as the result of the determination in operation S123, when the internal temperature of the load sensed through the temperature sensor (e.g., at least one temperature when a plurality of internal temperatures of the load are sensed) does not reach the target temperature, the cooking appliance 1 may determine again whether the internal temperature satisfies a second target value (Tc = f(T_current)) in operation S125.

As the result of the determination in operation S125, when the internal temperature satisfies the second target value, the cooking appliance 1 may return to operation 5111 to re-perform RF basic heating.

Meanwhile, as the result of the determination in operation S125, when the internal temperature does not satisfy the second target value, the cooking appliance 1 may return to operation 5111 to perform variable heating on the RF output rather than re-perform the RF basic heating.

See (a) of FIG. 10 for the second target value. For example, in (a) of FIG. 10, a linear slope (a cooking state) may correspond to the second target value. Referring to (a) of FIG. 10, whether the internal temperature satisfies the second target value may be determined by determining whether the cooking state matches the linear slope. For example, referring to (a) of FIG. 10, in section A (Ta), the internal temperature with respect to time has to follow the cooking state, that is, the linear slope, but the internal temperature with respect to time is higher than the linear slope. Therefore, in this case, the process of variably heating the RF output may be required. In (a) of FIG. 10, section B may also be described in a similar way, and since the internal temperature with respect to time is lower than in section A, it is desirable to adjust the RF output accordingly by variably heating the RF output according to the slope of the cooking state. Although the sections are expressed separately in (a) of FIG. 10, the degree of variable heating of the RF output may be controlled by considering the difference from the slope set for the final temperature with respect to the set time. For example, in (a) of FIG. 10, section A and section B are expressed as being the same, but the lengths of the sections may be different from each other, and the control degree of the variable heating of the RF output may vary accordingly. The length of the section, etc. may be arbitrarily determined by the user's choice or by the cooking appliance 1.

The variable heating process of the RF output may be accomplished as follows.

In operation S131, the cooking appliance 1 may perform the frequency scan through RF low power, similar to RF basic heating.

In operation S133, the cooking appliance 1 may detect the reflected output.

In operation S135, the cooking appliance 1 may determine whether the detected reflected output satisfies a predefined criteria.

In operation S137, the cooking appliance 1 may determine the scanned frequency when the detected reflected output satisfies the predefined criteria.

Thereafter, in operation S139, the cooking appliance 1 may determine whether Tc<f(T_current).

As the result of the determination in operation S139, when Tc<f(T_current), the cooking appliance 1 may perform control to perform heating to increase the output of the SSPM (operation S141) .

As the result of the determination in operation S139, when not Tc<f(T_current), the cooking appliance 1 may perform control to perform heating to decrease the output of the SSPM (operation S143) .

Thereafter, the cooking appliance 1 may repeat operations after operation S119 of sensing the temperature again through the temperature sensor.

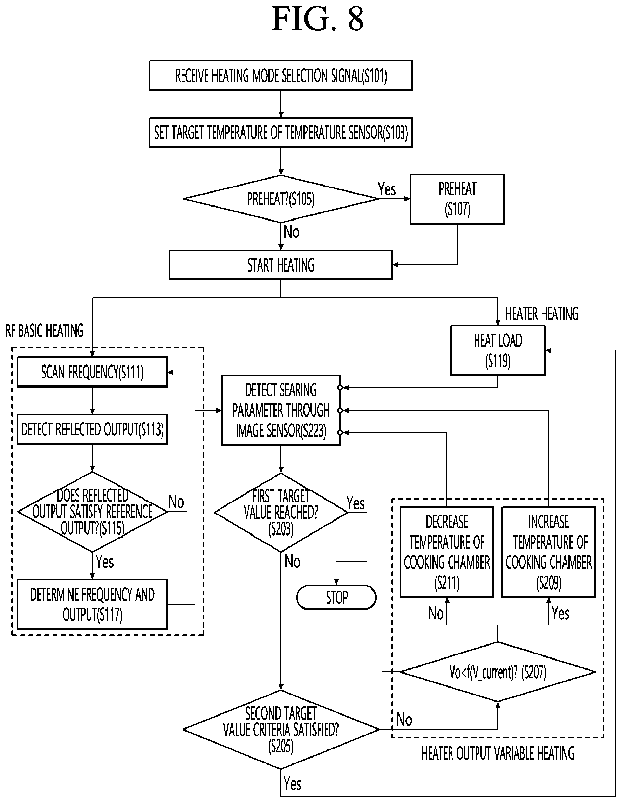

FIG. 8 is a flowchart for describing an example of the operation control algorithm of the cooking appliance 1 according to a combination of the RF output and the image sensor.

Descriptions that are the same or similar to those of FIG. 7 are equally applied to the operations of FIG. 8, and redundant descriptions thereof are omitted. For example, since operations S101 to S119 of FIG. 8 are substantially the same as those of FIG. 7, reference is made thereto and redundant descriptions thereof are omitted.

However, while the temperature of the load is measured through the temperature sensor in FIG. 7 described above, the image of the load is measured through the image sensor in FIG. 8.

Descriptions related thereto are given below.

According to an embodiment of the present disclosure, the cooking appliance 1 may prestore image data of loads according to the degree of cooking (e.g., well done, medium, rare, etc.). At this time, the prestored image data of the load may include an image of the final load according to the degree of cooking (e.g., a first target value described later). The prestored image data of the load may include a target image of the load per hour according to the degree of cooking (e.g., a second target value to be described later) and may be plural.

The cooking appliance 1 may control the heating degree of the heater or the variable heating of the heater by comparing and analyzing the image of the load obtained according to the set period and the prestored image. The cooking appliance 1 may include various image comparison analysis algorithms or devices such as an artificial intelligence learning engine for image analysis. Meanwhile, in relation to image comparative analysis, the cooking appliance 1 may perform data communication with an external server (not shown). The cooking appliance 1 may adjust and control the heating or variable heating of the heater based on the image comparison and analysis result received from the external server.

In relation to the image comparison analysis, the present disclosure may use a searing degree, that is, a searing factor. The searing factor may include color factors such as hue, brightness, and saturation of the load. However, for convenience of explanation, the external brightness of the load will be used as an example of the searing factor.

Meanwhile, the cooking appliance 1 may acquire a plurality of external images of the load through a single or a plurality of image sensors, may comprehensively analyze the analysis result of the plurality of acquired images, and may control the heater. For example, when the analysis result of the first image among the plurality of images satisfies the criteria, but the analysis result of the second image does not satisfy the criteria, it is desirable to comprehensively analyze the two image analysis results to determine the final degree of heater control.

In operation S201, the cooking appliance 1 may acquire the external image of the load by using the image sensor and may detect the external brightness of the load, that is, the searing degree, from the acquired image.

In operation S203, the cooking appliance 1 may determine whether the detected brightness of the load has reached the target brightness (i.e., the first target value). For example, the cooking appliance 1 may determine whether Vo>Vo_target. Vo may represent external brightness.

As the result of the determination in operation S203, when the measured external brightness of the load has reached the target brightness, the cooking appliance 1 may stop heating.

Meanwhile, as the result of the determination in operation S203, when the cooking appliance 1 determines that the measured external brightness of the load has not reached the target brightness, it may be determined whether a separately set external brightness criteria (i.e., the second target value) is satisfied (operation S205). For example, the cooking appliance 1 may determine whether Vo=f(V_current).

As the result of the determination in operation S205, when the detected brightness satisfies the external brightness criteria, the cooking appliance 1 may re-perform operation S119.

Meanwhile, as the result of the determination in operation S205, when the detected brightness does not satisfy the external brightness criteria, the cooking appliance 1 may perform variable heating of the heater output.

See (b) of FIG. 10 for the second target value. For example, the linear slope (cooking state) according to the set cooking level in (b) of FIG. 10 may correspond to the second target value. Referring to (B) of FIG. 10, whether the external brightness satisfies the second target value may be determined by determining whether the cooking state matches the linear slope. For convenience, the degree of cooking is assumed to be 'well done' in (b) of FIG. 10. In (b) of FIG. 10, in section A (Va), the external brightness with respect to time has to follow the cooking state, that is, the linear slope, but the external brightness with respect to time is lower than the linear slope. Therefore, in this case, the process of variable heating of the heater output may be necessary. In (b) of FIG. 10, section B (Vb) may also be described in a similar way, and since the external brightness with respect to time is higher than in section A (Va), it is desirable to adjust the heater output accordingly by variably heating the RF output according to the slope of the cooking state. Although the sections are expressed separately in (b) of FIG. 10, the degree of variable heating of the heater output may be controlled by considering the difference from the slope set for the final brightness with respect to the set time. For example, in (b) of FIG. 10, sections A to D (Va to Vd) are expressed as being the same, but the lengths of the sections may be different from each other, and the control degree of the variable heating of the heater output may vary accordingly. The length of the section, etc. may be arbitrarily determined by the user's choice or by the cooking appliance 1.

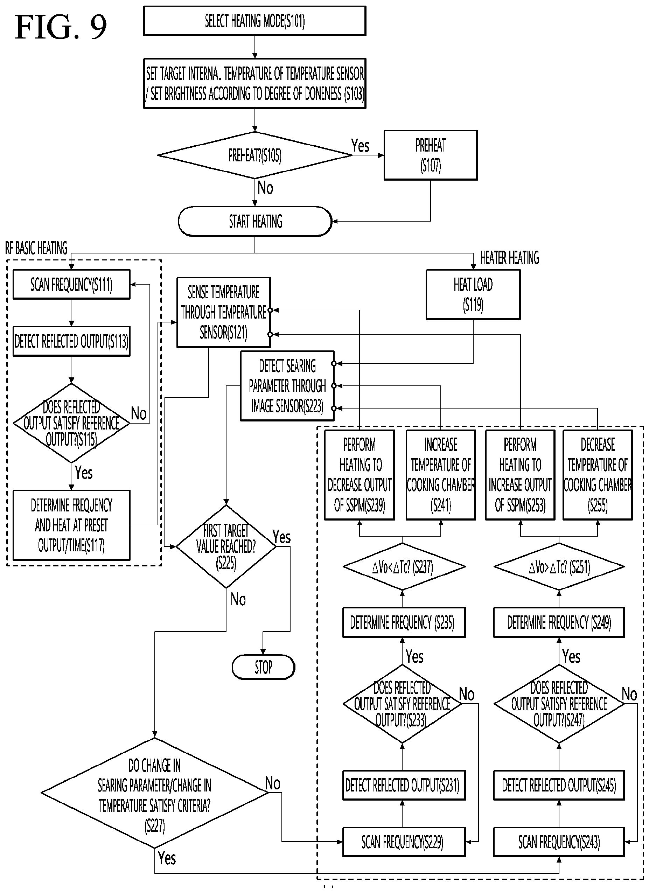

In the present disclosure, when each comparative analysis result in FIGS. 8 and 9 is less than a preset threshold value, the state may be monitored and specific control may be held.

The variable heating process of the heater output may be accomplished as follows.

In operation S207, the cooking appliance 1 may determine whether Vo<f(V_current).

As the result of the determination in operation S207, when Vo<f(V_current), the cooking appliance 1 may perform the variable heating control on the heater output to increase the temperature of the cooking chamber (operation S209).

Meanwhile, as the result of the determination in operation S207, when not Vo<f(V_current), the cooking appliance 1 may perform the variable heating control on the heater output to decrease the temperature of the cooking chamber (operation S211).

The cooking appliance 1 may re-perform operation S201 after operation S209 or S211. This process may be repeated several times depending on whether the condition is satisfied.

FIG. 9 is a flowchart for describing an example of a combination of the operation control algorithms of the cooking appliance 1 based on FIGS. 7 and 8.

The flowchart of FIG. 9 is a combination of the operations described individually with reference to FIGS. 7 and 8. Accordingly, the descriptions provided above with reference to FIGS. 7 and 8 are equally applied, and redundant descriptions thereof are omitted.

In FIG. 9, since the descriptions of FIGS. 7 and 8 are considered together, some operations may be different. This is described below.

The cooking appliance 1 may sense the internal temperature of the load through the temperature sensor after applying RF basic heating, and may detect brightness by acquiring the image of the outside of the load through the image sensor after applying heater heating.

In FIGS. 7 and 8 described above, the detected contents have been individually referred to when determining the degree of cooking. However, in FIG. 9, this may be applied together.

For example, the cooking appliance 1 may determine whether the sensed internal temperature of the load has reached the target temperature (first condition) and the external brightness of the load has reached the target brightness (second condition). This may be determined by determining whether Tc>Tc_target and Vo>Vo_target.

The cooking appliance 1 may perform control to stop heating when both the first and second conditions are satisfied. However, when at least one of the first and second conditions is not satisfied, the cooking appliance 1 may determine again whether the rate of change in temperature and brightness satisfies a predefined criteria. This may be determined based on the change in brightness/change in temperature (△Vo/△Tc>1) . When the value is greater than or equal to 1, the searing may be determined to be successful (Yes), and when the value is less than 1, the RF may be determined to be successful (No).

Meanwhile, the RF output variable heating operation and the heater output variable heating operation are different from FIGS. 7 and 8, and this is described below.

In the case of Yes, the frequency scan may be performed through RF low power, and after detecting the reflected output, it may be determined whether the reflected output criteria is satisfied. Thereafter, when it is determined that the reflected output satisfies the criteria, the frequency may be determined and it may be determined whether △Vo>△Tc. As the result of the determination as to whether △Vo>△Tc, when the change in external brightness (Vo) is determined to be greater than the change in internal temperature (Tc), heating control may be performed to increase SSPM output and/or to lower the temperature of the cooking chamber.

Meanwhile, in the case of No, the frequency scan may be performed through RF low power, and after detecting the reflected output, it may be determined whether the reflected output criteria is satisfied. Thereafter, when it is determined that the reflected output satisfies the criteria, the frequency may be determined and it may be determined whether △Vo<△Tc. As the result of the determination as to whether △Vo<△Tc, when the change in external brightness (Vo) is determined to be less than the change in internal temperature (Tc), heating control may be performed to decrease SSPM output and/or to increase the temperature of the cooking chamber.

After performing the heating control in each case, the temperature may be sensed again through the temperature sensor and/or the image sensor, and the subsequent procedures may be repeated.
(a) of FIG. 10 is a graph for describing the output mechanism according to temperature (T) over time. For example, when the reference temperature change amount (△T) is a linear graph, a non-linear graph may represent the cooking state (or food state) for the load.

The cooking appliance 1 may check the real-time heating temperature trend monitored through the temperature sensor based on the preset reference for each cooking condition (temperature by time: slope △T). The cooking appliance 1 may vary the RF output power based on the checking result. When the temperature over time is lower than the reference temperature, the cooking appliance 1 may re-perform the frequency scan, store the heating frequency, and then increase the RF output. Otherwise, that is, when the temperature is higher than the reference temperature, the cooking appliance 1 may lower the RF output. The process described above continues over time through real-time monitoring through the temperature sensor, and when the preset final temperature (Td) is reached, the cooking appliance 1 may stop cooking the load.

The cooking appliance 1 according to the present disclosure may perform individual control by referring to the reference temperature change amount according to the cooking state in each section.

For example, referring to the graph of (a) of FIG. 10, in section A (Ta), SSPM output may be controlled to decrease through frequency variable control. In contrast, in section B (Tb), SSPM output may be controlled to increase through frequency variable control.

In other words, the cooking appliance 1 may correct the RF output by comparing the load internal temperature value monitored in real time through the temperature sensor based on the reference temperature for each food. In (a) of FIG. 10, since section A (Ta) is higher than the reference temperature, after determining the heating frequency through the frequency scan, the previous SSPM output may be maintained. In the case of section B (Tb), since the temperature is lower than the reference temperature, the SSPM output may be increased after finding the heating frequency through the frequency scan. This process may continue until the final temperature set by the customer is reached. (Section A (Ta) : frequency control O, decrease in SSPM output / section B (Tb): frequency control O, increase in SSPM output)
(b) of FIG. 10 is a graph for describing the output mechanism according to brightness (V) over time. By referring to the reference brightness with linearity, the output may be controlled with reference to the brightness value according to the cooking state for the time unit, that is, the load acquired in each section.

The cooking appliance 1 may control frequency and heater output power with respect to time based on brightness (V), which is the surface color data of the load monitored through the image sensor.

The cooking appliance 1 may determine the searing (browning) state based on the degree of doneness according to the initially set degree of doneness of the load and the brightness value of the surface of the load monitored in real time through the image sensor. When the doneness monitored for each unit time is excessive, it may be controlled to maintain the previous heater output. However, otherwise, that is, when the doneness is low, the output of the heater may be controlled to increase. This process may be continued until the initially set degree of doneness is reached. (sections B and D (Vb, Vd) : decrease in heater output / sections A and C (Va, Bc): increase in heater output)

Meanwhile, the cooking appliance 1 may perform frequency control and output control by using both the temperature sensor and the image sensor to determine surface searing (real-time monitoring through the image sensor) and internal cooking progress (real-time monitoring through the temperature sensor).

(c) of FIG. 10 illustrates the output control algorithm according to the ratio of temperature and brightness. At this time, the output control algorithm may be the basis of the RF variable control algorithm based on the temperature sensor as illustrated in (a) of FIG. 10 and the heater variable control algorithm based on the image sensor as illustrated in (b) of FIG. 10.

The cooking appliance 1 may use the temperature sensor and the image sensor together to uniformly heat the inside and outside of the load. The output algorithm may be controlled by determining the internal degree of doneness through the temperature sensor and the external degree of doneness through the image sensor. At this time, the meaning of 'together' may be either simultaneous or sequential. For example, by simultaneously controlling the temperature sensor and the image sensor, it is possible to more accurately identify the cooking state of the load through more precise monitoring of the inside and outside of the load. In this manner, the uniformity and accuracy of cooking with respect to the load may be improved by performing variable control on the RF output and/or the output of the heater. This has the advantage of reducing customers' failure experiences (burning while cooking, etc.).

For example, when △V>△T, the cooking appliance 1 may determine that the searing (browning) progress on the surface of the load is faster than the internal cooking, such that the temperature of the cooking chamber may be lowered and the RF output may be increased.

Meanwhile, when △V<△T, the cooking appliance 1 may determine that cooking inside the load is faster than searing (browning) on the surface of the load, such the temperature of the cooking chamber may be increased and the RF output may be lowered.

At this time, the control of the temperature of the cooking chamber may follow the control algorithm according to the food ingredients set at the time of setting.

Referring to (c) of FIG. 10, in section A, that is, the section where temperature>brightness, the internal heating of the load is faster than the surface searing (browning) of the load, and thus, the top heater output may be increased and the SSPM output may be lowered.

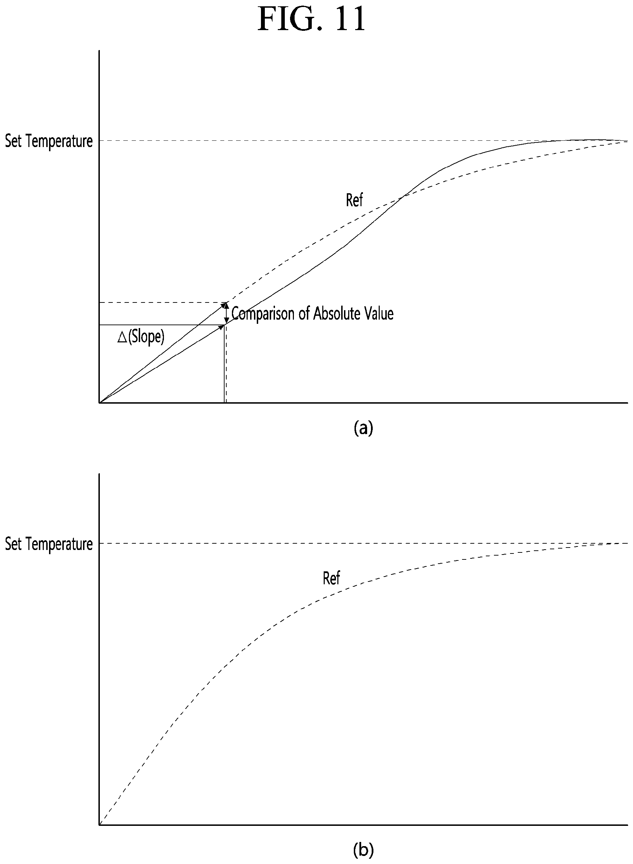

Referring to (c) of FIG. 10, in section B, that is, the section where brightness>temperature, the searing (browning) of the surface of the load is faster than the internal heating of the load, and thus, the output of the SSPM may be increased and the output of the top heater may be lowered.
(a) of FIG. 11 is a graph for describing the heating operation in the cooking appliance 1, and (b) of FIG. 1 is a graph for describing the defrosting operation in the cooking appliance 1. The operation may include, for example, roast, bake, sous-vide, etc.

Referring to (a) of FIG. 11, the cooking appliance 1 may set the heating time according to the initially set temperature and load weight, and may heat up to the set time/temperature by using RF and heater heating without preheating. At this time, the algorithm during heating is implemented, that is, the output may be controlled through real-time frequency control, slope according to the reference temperature (brightness) by time, or absolute value comparison. In the heating graph of (a) of FIG. 11, the dashed line may represent the reference and the solid line may represent the ratio between temperature and brightness monitored in real time.

Referring to (b) of FIG. 11, when the heating time is set according to the initially set temperature and load weight, the cooking appliance 1 may perform heating (defrosting) up to the set time/temperature by using RF and heater heating without preheating. In this case as well, the algorithm during heating is implemented, that is, the output may be controlled through real-time frequency control, slope according to the reference temperature (brightness) by time, or absolute value comparison.

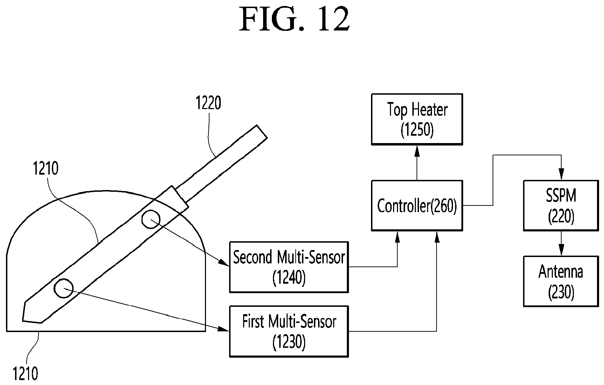

FIG. 12 is a diagram for describing the output variable control algorithm according to the location of the load.

Referring to FIG. 12, the configuration of the output variable control algorithm may be configured to include a temperature sensor 1220 including multi-sensors 1230 and 1240, a controller 260, a top heater 1250, an SSPM 220, and an antenna 230.

In the cooking appliance 1 that performs combination heating by using a plurality of heat sources, RF through the SSPM 220 may heat the inside of the load, and the top heater 1250 or 310 may heat the outside of the load 1210, thereby heating the entire load evenly.

As described above with reference to FIG. 12, each heat source may be controlled by using the multi-sensors for each location, especially in the temperature sensor.

The first multi-sensor 1230 may control the RF heat source 220 by monitoring the temperature inside the load in real time, and the second multi-sensor 1240 may control the top heater 1250 by monitoring the temperature outside the load in real time. In this way, faster and more uniform heating is possible by simultaneously monitoring not only the inside of the load but also the outside of the load through the temperature sensor 1220 including the multi-sensors.

In another method, real-time monitoring is performed for each location (depth) of the load by using the multi-sensors of the temperature sensor 1220 to control the corresponding heat source. Variable control may be performed on the RF output by using the temperature value measured through the first multi-sensor 1230 and the temperature value measured through the second multi-sensor 1240. For example, in the illustrated case, when the values measured through the first or second multi-sensor are different depending on the location of the load and it is determined that the heating is not uniform, it is desirable to control the RF output to achieve uniform heating by readjusting the frequency. In this case, the heater 1250 may not be an essential component.

Meanwhile, in FIG. 12, the second multi-sensor 1240 is preferably positioned (inserted) relatively closer to the surface of the load 1210 than the first multi-sensor 1230.

In this regard, the temperature sensor 1220 may include an indicator (not shown) that may identify the location of each multi-sensor within the load. The indicator may be implemented to be identified not only visually but also through sound output in relation to hearing.

Meanwhile, although not illustrated, the temperature sensor 1220 may include a plurality of multi-sensors in an insertion portion 1225. For example, when the size of the load is small and the location of the multi-sensor is fixed within the insertion portion 1225, it may be difficult to acquire a plurality of temperature sensing values. In the opposite case, the location of the multi-sensor is not differentiated compared to the size of the load, and thus, it may be difficult to acquire an accurate temperature sensing value for the cooking state of the load.

In the multi-sensor according to the present disclosure, a plurality of sensors may be arranged at predetermined intervals in the insertion portion 1225. Depending on the load, at least two or more multi-sensors may be activated to acquire the internal temperature value of the load, which may be used for RF and/or variable heater control.

In a similar manner, although not illustrated, the insertion portion 1225 may be implemented in a form in which the length may be reduced or extended in consideration of the size of the load, etc.

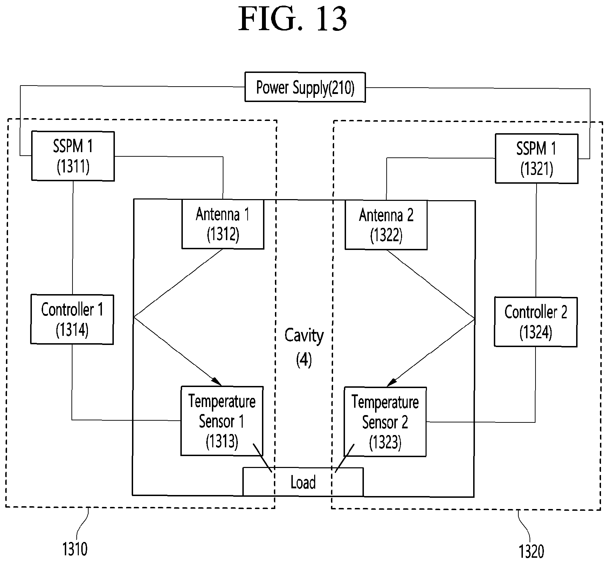

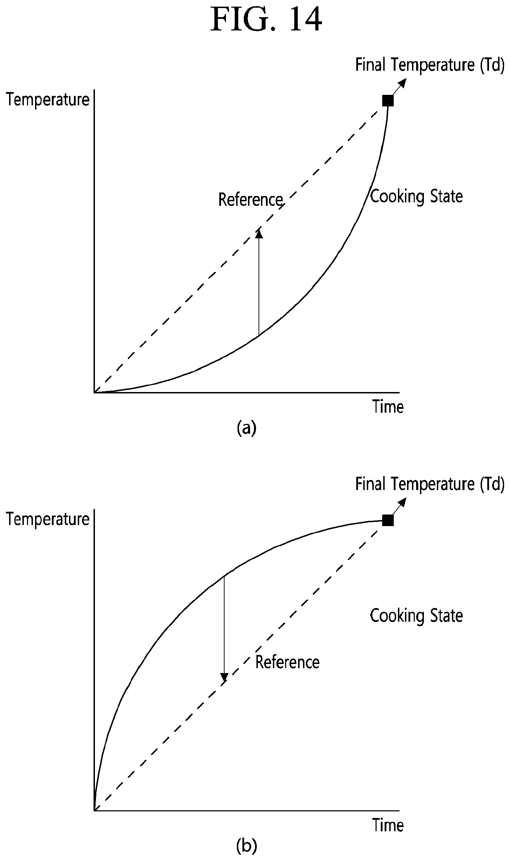

FIG. 13 is a diagram for describing multi-point control by using a multi-temperature sensor. (a) of FIG. 14 is a graph for describing the heating performance of a first antenna at location 1, and (b) of FIG. 14 is a graph for describing the heating performance of a second antenna at location 2.

Referring to FIGS. 13 to 15, for more precise control of the load, it is possible to control the frequency and output through temperature sensing at various locations of the load by using the multi-temperature sensor rather than the single temperature sensor described above for one location. At this time, each temperature sensor constituting the multi-temperature sensor may or may not have a plurality of multi-sensors in the insertion portion as illustrated in FIG. 12.

Referring to FIG. 13, each temperature sensor may be independently or individually controlled.

A first processor 1310 may include a first SSPM 1311, a first antenna 1312, a first temperature sensor 1313, and a controller 1314 and may perform variable control on the RF output after sensing the temperature of the load at the first location.

A second processor 1320 may include a second SSPM 1321, a second antenna 1322, a second temperature sensor 1323, and a controller 1324 and may perform variable control on the RF output after sensing the temperature of the load at the second location.

For example, in FIG. 13, the temperature of the load at the left and right locations may be monitored through the respective temperature sensors 1313 and 1323, and the left and right SSPMs 1311 and 1321 may be independently controlled. When the temperature on the left side is lower than the reference temperature, the RF output power of the first antenna 1312 may be increased through the first SSPM 1311. When the temperature on the right side is lower than the reference temperature, the RF output power of the second antenna 1322 may be increased through the second SSPM 1321. In this way, the load may be controlled to be uniformly heated by individually sensing the temperature according to the location of the load and individually controlling the SSPM and the antenna.

Meanwhile, in FIG. 13, the controllers 1314 and 1324 are arranged individually. However, only one controller (integrated controller) is provided and the processes 1310 and 1320 may be individually controlled.

By individually controlling the respective antennas, more uniform heating is possible.

Additionally, referring to (a) and (b) of FIG. 14, the final target temperature for uniform heating is the same, but the heating performance of the second antenna 1312 may be configured to be superior to the heating performance of the first antenna 1312. In this case, the output of the second antenna 1322 is lowered and the output of the first antenna 1312 is increased to ensure uniform heating by matching performance to the same temperature for the same time. Depending on embodiments, the configuration may be opposite to that described above.

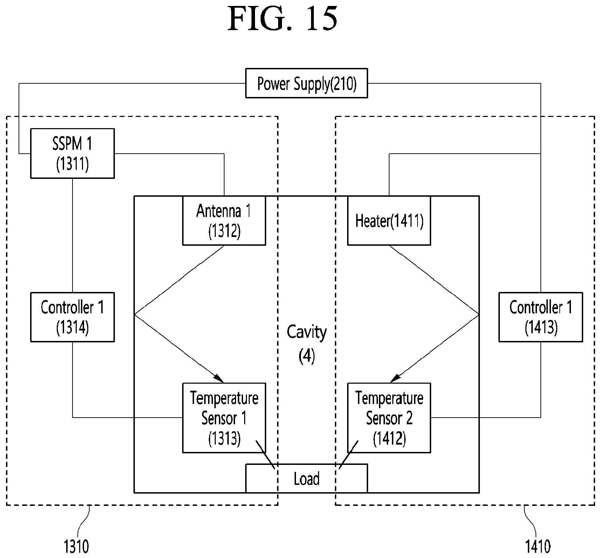

In FIG. 15, the multi-temperature sensor is used like in FIG. 13. However, unlike the configuration of FIG. 13, the first processor 1310 may be configured to control the RF output after temperature sensing, and the second processor 1510 may be configured to control the output of the heater 1412 through the second controller 1413 after temperature sensing.

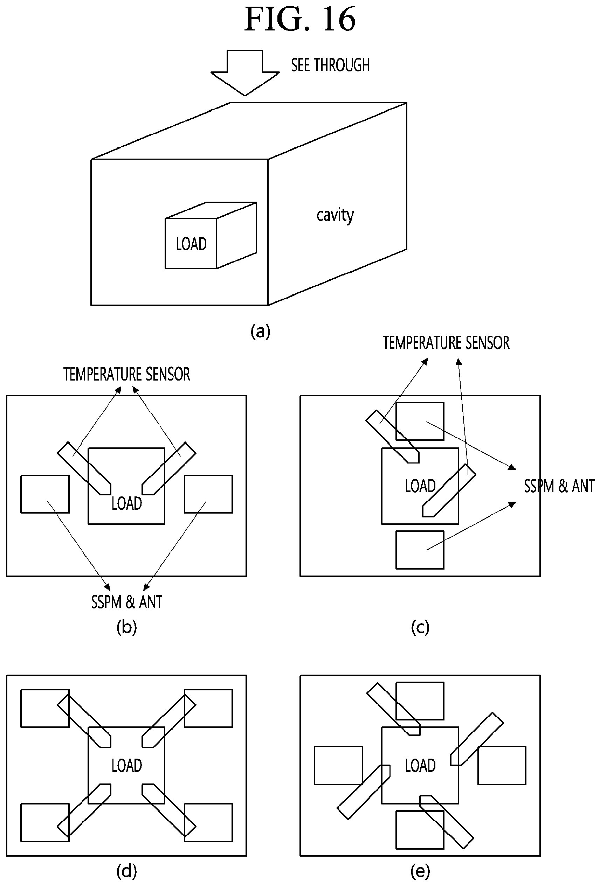

In FIG. 16, the arrangement and structure when using the multi-sensors are described.

The multi-sensors may refer to at least two sensors. At this time, the sensor may represent a temperature sensor. Additionally, the sensor may refer to an image sensor. However, for convenience of explanation, an example in which the sensor is a temperature sensor is described.

When the multi-sensor including two sensors is applied to the cooking appliance 1, the cooking appliance 1 may configure a separate processor for each sensor.

However, when the multi-sensor including three or more sensors is applied to the cooking appliance 1, the cooking appliance 1 may configure a processor for one or more sensors. However, even in this case, a plurality of processor may be provided, but the present disclosure is not limited thereto.

As illustrated in (a) of FIG. 16, it is assumed that one load is present in the cavity 4. When viewed from the top, the arrangement of each temperature sensor and related components (e.g., SSPMs and antennas) may be implemented in the form illustrated in (b) to (e) of FIG. 16. However, the present disclosure is not limited thereto. For convenience, depending on the arrangement of the components, in the case of (b) of FIG. 16, a left and right independent control method may be named and described, in the case of (c) of FIG. 16, a top and bottom independent control method may be named and described, and in the case of (d) and (e) of FIG. 16, a four-way independent control method may be named and described. However, although (d) of FIG. 16 is a corner or geon/gon/gam/yi control method, and (e) of FIG. 16 is four directions, i.e., east, west, south, and north, but may not be about the corners of the load.

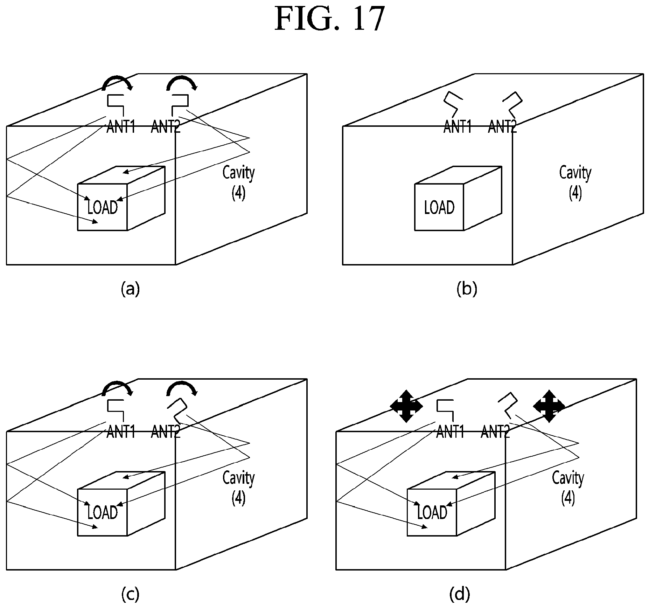

FIG. 17 describes a movable antenna.

In (a) of FIG. 17, each antenna may be rotatable at the position although the position is fixed. In this manner, an RF radiation angle toward the load may vary.

In (b) of FIG. 17 as well, each antenna is fixed, but the own angle thereof may be changed. Accordingly, the RF radiation angle with respect to the load may vary.

In (c) of FIG. 17, when the combination of (a) to (b) of FIG. 17, that is, the respective antennas are rotatable, the own angle thereof may also be changed. Accordingly, the RF radiation angle may be controlled as desired for the load.

In (d) of FIG. 17, unlike (a) to (c) of FIG. 17, the respective antennas may not be fixed to specific locations, but may be implemented to be movable in any direction on the corresponding plane (i.e., above the cavity 4).

Meanwhile, in the case of (d) of FIG. 17, the respective antennas may also be implemented to be rotatable and/or adjustable in the own angle thereof.

As illustrated in FIG. 17, it is possible to control the antenna to ensure uniform heating by compensating for areas vulnerable to heating in the load through rotation or angle variation rather than complete fixing of the antenna.

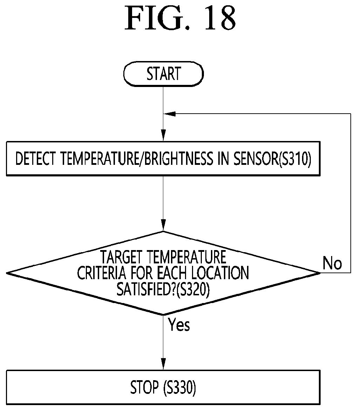

In this regard, referring to FIG. 18, the cooking appliance 1 may detect temperature/brightness through the sensor (S310) and determine whether the target temperature criteria for each location is satisfied (S320).

When the cooking appliance 1 does not satisfy the target temperature criteria for each location, the above-described process may be repeated by controlling the angle, location, rotation, etc. of at least one antenna.

Meanwhile, when the target temperature criteria for each location is satisfied, cooking may be stopped (S330).

When the multi-sensor with a plurality of sensors is applied to the cooking appliance 1, the respective sensors may individually function as a single sensor for different loads or may function as the multi-sensor. Therefore, the above description may be inferred and applied to a plurality of loads.

In the cooking appliance 1 according to the present disclosure, since the accuracy of monitoring the state of the load through RF scan alone is low. Accordingly, by controlling the characteristics (frequency, output, etc.) of the heat source based on real-time temperature monitoring inside the load through the sensor, cooking accuracy for load may be further improved to enable sophisticated cooking.

By using the multi-sensors (sub-sensors) within one sensor, it is possible to monitor not only the internal temperature but also the external temperature of the load in real time. At this time, one sub-sensor controls the RF output by monitoring the temperature inside the load in real time, and the other sub-sensor controls the output of the heater by monitoring the temperature outside the load in real time. Accordingly, faster and more uniform heating is enabled.

The multi-sensors may be used to perform control through real-time monitoring of multiple locations (or points) within the load. For example, more sophisticated cooking becomes possible by independent control through antennas placed on the left and right.

By varying the output of the antenna based on the temperature monitored in real time through the sensors at the left and right locations of the load, faster and more uniform heating may be possible compared to the same period of time.

According to at least one of various embodiments of the present disclosure, there is an effect of automatically controlling cooking by monitoring the load in real time.

According to at least one of various embodiments of the present disclosure, there is an effect of performing variable control on the frequency and output of the heat source according to the load.

According to at least one of various embodiments of the present disclosure, there is an effect of enabling more accurate and uniform heating of the load.

In addition to the above-described effects, specific effects of the present disclosure will be described together while explaining specific details.

The above description is merely illustrative of the technical spirit of the present disclosure, and various modifications and changes can be made by those of ordinary skill in the art, without departing from the scope of the present disclosure.

Therefore, the embodiments disclosed in the present disclosure are not intended to limit the technical spirit of the present disclosure, but are intended to explain the technical spirit of the present disclosure. The scope of the technical spirit of the present disclosure is not limited by these embodiments.

The scope of the present disclosure should be interpreted by the appended claims, and all technical ideas within the scope equivalent thereto should be construed as falling within the scope of the present disclosure.

### [Description of Symbols]

1: cooking appliance
2: housing
3: door
4: cavity

## Claims

1. A cooking appliance (1) comprising:
a solid-state power modulator, SSPM, (220) configured to generate frequency and radio frequency, RF, output;
a power supply (210) configured to supply power to the SSPM (220) ;
an antenna (230) configured to radiate the RF output to a load;
a temperature sensor (240) configured to acquire internal temperature data of the load; and
a controller (260) configured to perform variable control on the frequency and RF output based on the acquired internal temperature data of the load.

2. The cooking appliance of claim 1, wherein the controller (260) is configured to determine whether the acquired internal temperature data of the load is greater than or equal to a first reference temperature.

3. The cooking appliance of claim 2, wherein the controller (260) is configured to, when the internal temperature data of the load does not reach the first reference temperature, determine whether the internal temperature data of the load is greater than or equal to a second reference temperature.

4. The cooking appliance of claim 3, wherein the controller (260) is configured to, when the internal temperature data of the load does not reach the second reference temperature, perform variable control on the frequency and RF output.

5. The cooking appliance of claim 4, wherein the controller (260) is configured to:
scan a frequency and detect reflected output;
when the detected reflected output satisfies a reference output, determine the scanned frequency; and
when an internal temperature is lower than a current temperature, perform variable control to increase an output of the SSPM (220).

6. The cooking appliance of claim 4, wherein the controller (260) is configured to:
scan a frequency and detect reflected output;
when the detected reflected output satisfies a reference output, determine the scanned frequency; and
when an internal temperature is higher than a current temperature, perform variable control to decrease an output of the SSPM (220).

7. The cooking appliance of any one of claims 1 to 6, wherein the temperature sensor (240) comprises at least one sub-sensor or is a multi-sensor.

8. A cooking appliance comprising:
a heater (310) configured to generate heat for heating a load;
a power supply (210) configured to supply power to the heater;
an image sensor (320) configured to acquire an image of a surface of the load; and
a controller (260) configured to compare and analyze the acquired image of the surface of the load with a prestored reference image and perform variable control on an output of the heater based on a comparison analysis result.

9. The cooking appliance of claim 8, wherein the controller (260) is configured to extract a searing factor from the image of the surface of the load and compare the extracted searing factor with a first reference searing factor extracted from the reference image.

10. The cooking appliance of claim 9, wherein the controller (260) is configured to compare the searing factor extracted from the image of the surface of the load with a second reference searing factor, when a difference between the searing factor and the first reference searing factor is greater than or equal to a first threshold value.

11. The cooking appliance of claim 10, wherein the controller (260) is configured to perform variable control on an output of the heater (310) when a difference between the searing factor extracted from the image of the surface of the load and a second reference searing factor is greater than or equal to a second threshold value.

12. The cooking appliance of claim 11, wherein the controller (260) is configured to perform variable control to increase the output of the heater (310) when the difference between the searing factor extracted from the image of the surface of the load and the second reference searing factor is greater than or equal to the second threshold value.

13. The cooking appliance of claim 11 or 12, wherein the controller (260) is configured to perform variable control to decrease the output of the heater (310) when the difference between the searing factor extracted from the acquired image of the load and the second reference searing factor is greater than or equal to a third threshold value.

14. The cooking appliance of any one of claims 8 to 13, wherein the image sensor (320) comprises at least one camera sensor.

15. A cooking appliance comprising:
a solid-state power modulator, SSPM, (220) configured to generate frequency and radio frequency, RF, output;
a heater (310) configured to generate heat for heating a load;
a power supply (210) configured to supply power to the SSPM (220) and the heater (310);
an antenna (230) configured to radiate the RF output to the load;
a sensor (320) configured to acquire internal temperature data of the load and acquire a surface image of the load; and
a controller (260) configured to perform variable control on at least one of the frequency and RF output or an output of the heater based on the internal temperature data of the load and an image acquired from the surface image.
